# EUROPEAN PATENT APPLICATION

(11) **EP 3 290 323 A1**
(43) Date of publication of application: **07.03.2018**
(21) Application number: 17182495.6
(22) Date of filing: 21.07.2017
(51) Int. Cl.: B62M 6/90, B62K 11/00, B62K 19/30, B62J 6/00

(54) **BATTERY BOX STRUCTURE OF ELECTRICAL TWO-WHEELED VEHICLE**

(30) Priority: 05.09.2016 TW 105213611 U
(71) Applicant: Kwang Yang Motor Co., Ltd., Kaohsiung City (TW)
(72) Inventor: Ke, Shiow-Pyng, Cambridge, CB11AH (GB); Hsu, Meng-Chin, Cambridge, CB11AH (GB); Hung, Chung-Jui, Cambridge, CB11AH (GB); Chen, Yi-Tso, Cambridge, CB11AH (GB)
(74) Representative: Horak, Michael

(57) **Abstract**

The present invention relates to a battery box structure of an electric two-wheeled vehicle. The electric two-wheeled vehicle (2) comprises a frame unit (21) that is connected to a steering mechanism (22). A front fork (23) is connected to a lower end of the steering mechanism (22). A front wheel (24) is connected, in a rotatable manner, to a lower end of the front fork (23). The electric two-wheeled vehicle (2) comprises a motor. A seat section (26) is arranged rearwards of the steering mechanism (22) and located above a rear wheel (25). The electric two-wheeled vehicle (2) is provided with a vehicle cover (27) arranged around an outer periphery thereof. The vehicle cover (27) comprises a foot plate (274), which defines, in combination with a bottom cover member (275) located under the foot plate (274), a receiving space (A). The receiving space (A) receives and retains therein a battery (29). The battery (29) is electrically connected to and drives the motor that is mounted to the rear wheel (25). The battery (29) is received in a battery box (3), wherein the battery box (3) is provided with a lifting device (4), such that the lifting device (4) is operable to raise the battery box (3) to set the battery box (3) in a vertical condition with respect to the receiving space (A) to allow for easy removal of the battery (29) out of the battery box (3).

## Description

### (a) Technical Field of the Invention

The present invention relates generally to a battery box structure of an electrical two-wheeled vehicle, and more particularly to a battery box structure of an electric two-wheeled vehicle that allows for easy lift-up and removal of a battery of the electric two-wheeled vehicle.

### (b) Description of the Prior Art

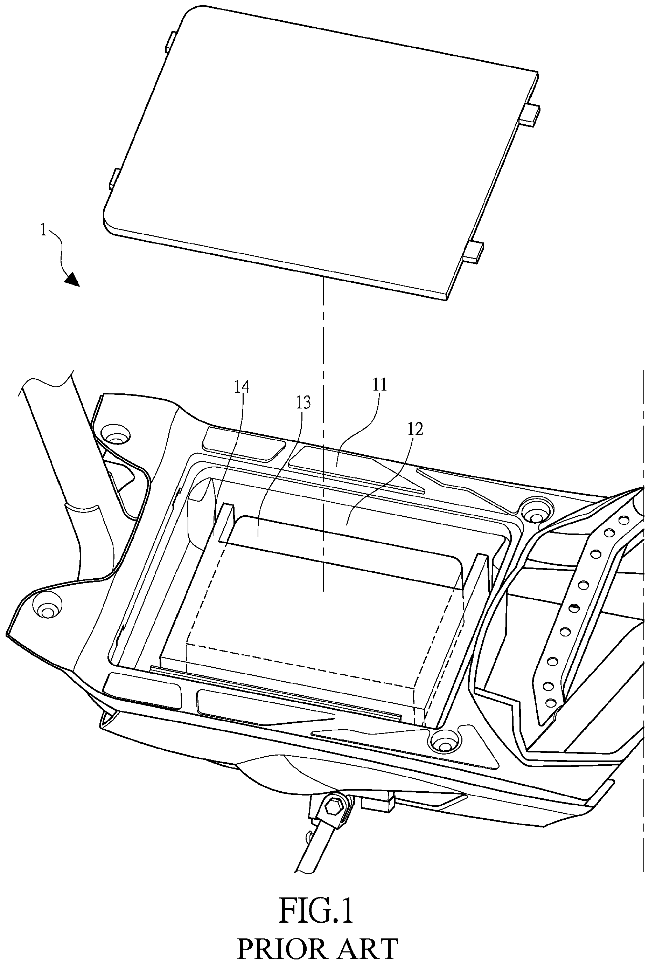

As shown in FIG 1, an electric two-wheeled vehicle 1 is often provided with a receiving space 12 below a foot plate 11 that functions to receive feet of a rider to place thereon. The receiving space 12 receives and holds therein a battery 13 that serves as a power source of the electric two-wheeled vehicle 1.

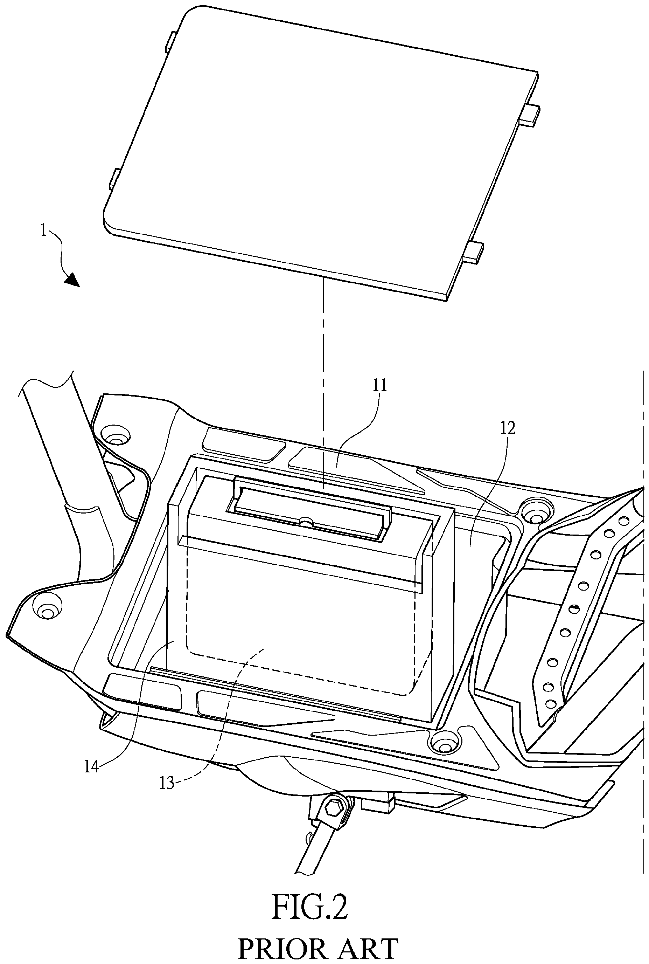

As shown in FIGS. 1 and 2, the battery 13 is received and retained in a battery box 14. The battery 13 has a weight and size and the electric two-wheeled vehicle 1 must be kept from the ground surface with a predetermined height so that the battery 13, together with the battery box 14, is often received in the receiving space 12 under the foot plate 11 in a manner of being horizontally set.

The conventional battery box 14, as discussed above, is effective in receiving and retaining the battery 13 therein. However, to maintain, replace, or withdraw the battery 13 for charging, a rider must first re-orienting the battery box 14 that is horizontally set to a vertical, upward condition. In other words, the battery box 14 is re-oriented in a vertical condition in the receiving space 12 and then, the rider may lift up and remove the battery 13 out of the battery box 14. Such an operation of re-orienting the battery box 14 to a vertical condition may be severely interfered with due to a gap around the battery box 14 located in the receiving space 12 being small. Further, since the battery 13 received and retained in the battery box 14 has a weight, re-orienting the battery box 14 to a vertical condition would be difficult.

Thus, it is a challenge of the electric two-wheeled vehicle manufacturers to provide a battery box structure of an electric two-wheeled vehicle, which makes it easy to lift up and remove a battery out of the electric two-wheeled vehicle.

### SUMMARY OF THE INVENTION

The primary objective of the present invention is to provide a battery box structure of an electric two-wheeled vehicle, which overcomes the drawback of a conventional battery box that removal out of an electric two-wheeled vehicle is inconvenient.

To achieve such an objective, a technical solution of the present invention, as presented in claim 1, is to provide a battery box structure of an electric two-wheeled vehicle, wherein the electric two-wheeled vehicle comprises a frame unit that is connected to a steering mechanism. A front fork is connected to a lower end of the steering mechanism. A front wheel is connected, in a rotatable manner, to a lower end of the front fork. The electric two-wheeled vehicle comprises a motor. A seat section is arranged rearwards of the steering mechanism and located above a rear wheel. The electric two-wheeled vehicle is provided with a vehicle cover arranged around an outer periphery thereof. The vehicle cover comprises a foot plate, which defines, in combination with a bottom cover member located under the foot plate, a receiving space, wherein the receiving space receives and retains therein a battery. The battery is electrically connected to and drives the motor that is mounted to the rear wheel. The battery is received in a battery box. The battery box is provided with a lifting device, such that the lifting device is operable to raise the battery box to set the battery box in a vertical condition with respect to the receiving space to allow for easy removal of the battery out of the battery box.

A technical solution of the present invention according to claim 2 is to provide a battery box structure of an electric two-wheeled vehicle, wherein the frame unit comprises a main tube extending towards a rear end of a body of the vehicle, and a left footrest tube and a right footrest tube, which are arranged in pair and are respectively set on a left side and a right side, extending further rearward from the main tube. The lifting device has an end fixed to an external wall of one side of the battery box and an opposite end fixed to the left footrest tube or the right footrest tube.

A technical solution of the present invention according to claims 4 and 5 is to provide a battery box structure of an electric two-wheeled vehicle, wherein the lifting device comprises a hydraulic extension cylinder or a pneumatic extension cylinder.

A technical solution of the present invention according to claims 6 and 7 is to provide a battery box structure of an electric two-wheeled vehicle, wherein the lifting device is provided with a damper mechanism or a ratchet structure.

The efficacy achieved with the technical solution of the present invention according to claim 1 is that a lifting device is mounted to one side of a battery box and the lifting device is operable to raise up the battery box so as to set the battery box in a vertical condition in a receiving space to ease an operation of lifting up and removing a battery out of a battery box.

The efficacy achieved with the technical solution of the present invention according to claim 2 is that the lifting device has an end fixed to an external wall of one side of the battery box and an opposite end fixed to the left footrest tube or the right footrest tube so as to ease mounting of the lifting device.

The efficacy achieved with the technical solution of the present invention according to claims 3 and 4 is that the lifting device comprises a hydraulic extension cylinder or the pneumatic extension cylinder so as to ensure a desired raising performance of the lifting device.

The efficacy achieved with the technical solution of the present invention according to claims 5 and 6 is that the hydraulic extension cylinder or the pneumatic extension cylinder is provided with a damper mechanism or a ratchet structure so as to enhance operation safety of the lifting device.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view illustrating a conventional battery box of an electric two-wheeled vehicle.
FIG 2 is a schematic view illustrating an operation of lifting up the conventional battery box of the electric two-wheeled vehicle.
FIG 3 is a schematic side elevational view illustrating an electric two-wheeled vehicle according to the present invention.
FIG 4 is a cross-sectional view illustrating a receiving space of the electric two-wheeled vehicle of the present invention.
FIGS. 5-7 illustrate an operation of lifting up a battery of a battery box of the electric two-wheeled vehicle according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

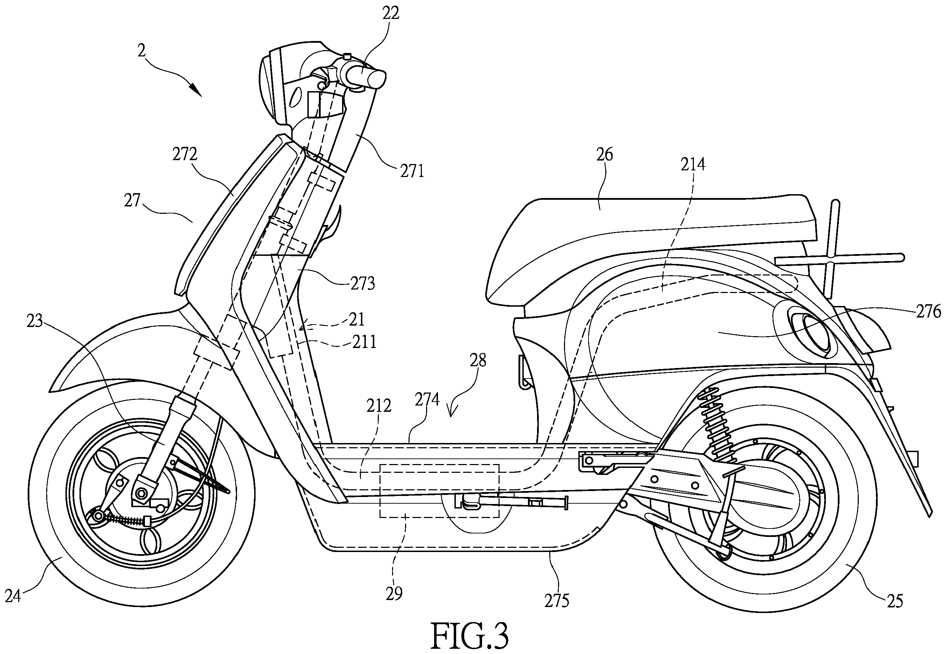

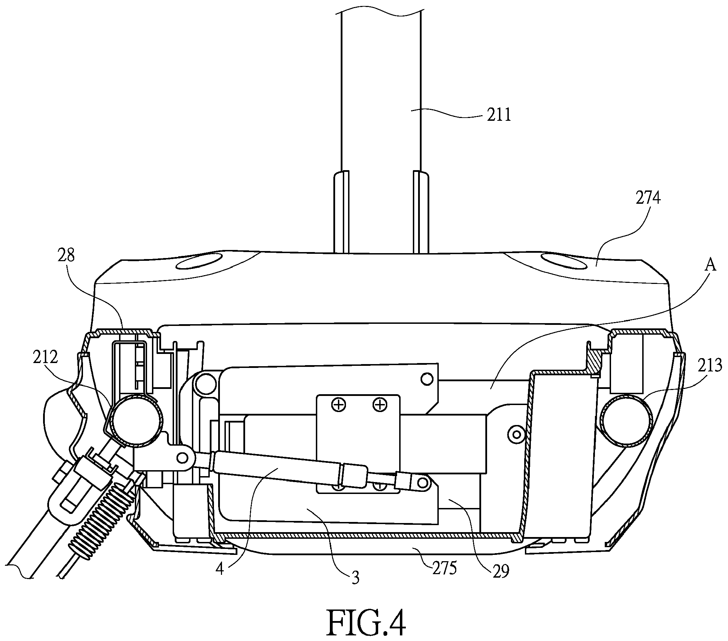

Referring firstly to FIGS. 3 and 4, the present invention provides a battery box structure of an electric two-wheeled vehicle. The electric two-wheeled vehicle 2 comprises a frame unit 21 having a front end to which a steering mechanism 22 is mounted. A front fork (front shock absorber) 23 is mounted to a lower end of the steering mechanism 22. A front wheel 24 is mounted, in a rotatable manner, to a lower end of the front fork 23. The frame unit 21 comprises a main tube 211 that extends toward a rear end of a body of the vehicle, and a left footrest tube 212 and a right footrest tube 213, which are arranged in pair and are respectively set on a left side and a right side, extend further rearward from the main tube 211. A rear frame member 214 is arranged rearwards of the left footrest tube 212 and the right footrest tube 213. A rear wheel 25 is arranged under the rear frame member 214. The rear wheel 25 comprises a hub motor (not shown) mounted therein to provide power to the electric two-wheeled vehicle 2. A seat section 26 is arranged rearwards of the steering mechanism 22 and located above the rear wheel 25 and the seat section 26 is spaced from the steering mechanism 22 by a spacing distance. The electric two-wheeled vehicle 2 is provided, on an outer periphery thereof, with a vehicle cover 27. The vehicle cover 27 comprises a head cover member 271 that covers the steering mechanism 22, a front body cover member 272 that is arranged under the head cover member 271 and covers a front end portion of the vehicle body, and a knee shielding cover 273 that is arranged rearwards of the front body cover member 272. A foot plate 274 is arranged below and between the steering mechanism 22 and the seat section 26, and more specifically, the foot plate 274 is arranged on the left footrest tube 212 and the right footrest tube 213. A bottom cover member 275 is arranged under the foot plate 274. The electric two-wheeled vehicle 2 is provided on each of the two sides thereof, with a side body cover member 276 below the seat section 26. The electric two-wheeled vehicle 2 is provided with a power source, and in the present invention, a hub motor, which, as shown in the drawings, is provided for driving the rear wheel 25, is taken as an example. In practice, the electric two-wheeled vehicle 2 of the present invention may comprise a front-located motor to drive, through a drive chain or a belt, the rear wheel 25, or a driving mechanism made up of a motor and a transmission box can be used to drive the rear wheel 25. Thus, in the present invention, driving of the rear wheel 25 is not limited to the hub motor discussed above.

As shown in FIGS. 3 and 4, the foot plate 274 may be formed as a foot support section 28, and the foot support section 28 may allow a rider to place feet thereon. The foot plate 274 and the bottom cover member 275 collectively define a receiving space A therebetween. The receiving space A receives a battery 29 positioned therein. The battery 29 is electrically connected to the rear wheel 25, so as to supply electrical power for setting the rear wheel 25 in operation. In this regard, a control device (not shown) that is mounted on the steering mechanism 22 may be used to control the operation of the rear wheel 25 to cause movement of the electric motorcycle 2.

As shown in FIGS. 3 and 4, the battery 29 is received and retained in a battery box 3. The battery box 3 is provided on one side thereof with a lifting device 4. The lifting device 4 can be a hydraulic cylinder or pneumatic cylinder, wherein the hydraulic extension cylinder or the pneumatic extension cylinder is provided with a damper structure or a ratchet mechanism in order to reduce a rising speed of the lifting device 4 to enhance operation safety of the lifting device 4. The lifting device 4 has one end fixed to an external wall of the one side of the battery box 3 and an opposite end mounted to the left footrest tube 212 or the right footrest tube 213, wherein, in the instant embodiment, the left footrest tube 212 is taken as an example for illustration.

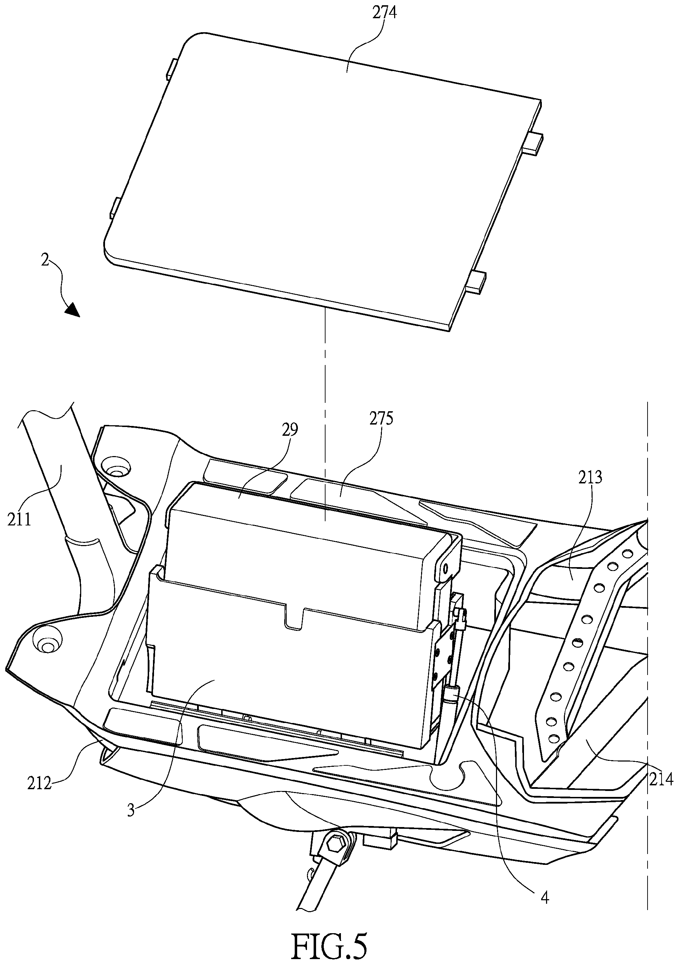

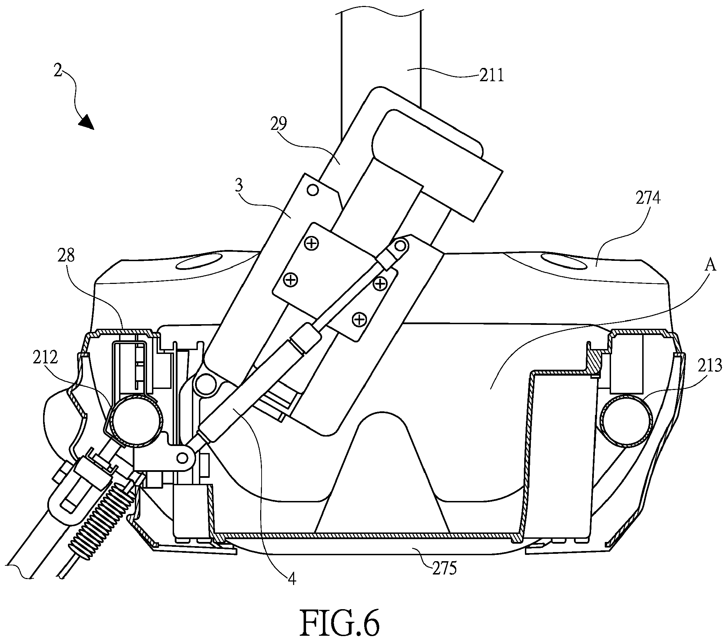

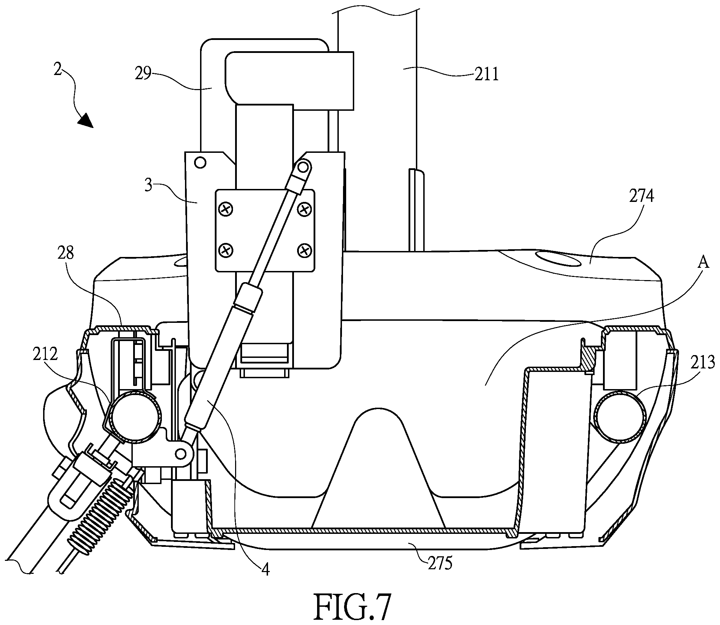

As shown in FIGS. 5, 6, and 7, the battery box 3 in which the battery 29 is received and retained is positioned, in a horizontal manner, in the receiving space A and under such a condition, the lifting device 4 arranged on the one side of the battery box 3 shows a configuration of being compressed and shortened and being oriented leftward/rightward for being received, in a contracted form and together with the battery box, in the receiving space A. A user, with an attempt to remove out the battery 29, first removes the foot plate 274 to allow the lifting device 4 arranged at the one side of the battery box 3 to lift up the battery box 3 in the receiving space A by means of an extending force generated by itself, whereby the battery box 3 is in a condition of being approximately vertical in the receiving space A to allow the user to directly lift up and remove the battery 29 out of the battery box 3 so that lifting up and removing the battery 29 out of the battery box 3 by the user is made easy and convenient.

The primary efficacy of the present invention is that a lifting device 4 is mounted to one side of the battery box 3 and the lifting device 4 is operable to raise up the battery box 3 so as to set the battery box 3 in a vertical condition in a receiving space A to ease an operation of lifting up and removing a battery 29 out of a battery box 3.

Another efficacy of the present invention is that the lifting device 4 is formed as a hydraulic extension cylinder or a pneumatic extension cylinder to ensure a desired lifting performance of the lifting device 4.

A further efficacy of the present invention is that the hydraulic extension cylinder or the pneumatic extension cylinder is provided with a damper structure of a ratchet mechanism to enhance operation safety of the lifting device 4.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. A battery box structure of an electric two-wheeled vehicle, wherein the electric two-wheeled vehicle (2) comprises a frame unit (21) that is connected to a steering mechanism (22), a front fork (23) being connected to a lower end of the steering mechanism (22), a front wheel (24) being connected, in a rotatable manner, to a lower end of the front fork (23), the electric two-wheeled vehicle (2) comprising a motor, a seat section (26) being arranged rearwards of the steering mechanism (22) and located above a rear wheel (25), the electric two-wheeled vehicle (2) being provided with a vehicle cover (27) arranged around an outer periphery thereof, the vehicle cover (27) comprising a foot plate (274), which defines, in combination with a bottom cover member (275) located under the foot plate (274), a receiving space (A), wherein the receiving space (A) receives and retains therein a battery (29), the battery (29) being electrically connected to and driving the motor that is mounted to the rear wheel (25), the battery (29) being received in a battery box (3), **characterized in that** the battery box (3) is provided with a lifting device (4), such that the lifting device (4) is operable to raise the battery box (3) to set the battery box (3) in a vertical condition with respect to the receiving space (A) to allow for easy removal of the battery (29) out of the battery box (3).

2. The battery box structure of the electric two-wheeled vehicle according to claim 1, wherein the frame unit (21) comprises a main tube (211) extending towards a rear end of a body of the vehicle, and a left footrest tube (212) and a right footrest tube (213), which are arranged in pair and are respectively set on a left side and a right side, extending further rearward from the main tube (211); and the lifting device (4) has an end fixed to an external wall of one side of the battery box (3) and an opposite end fixed to the left footrest tube (212) or the right footrest tube (213).

3. The battery box structure of the electric two-wheeled vehicle according to claim 1 or 2, wherein the lifting device (4) comprises a hydraulic extension cylinder.

4. The battery box structure of the electric two-wheeled vehicle according to claim 1 or 2, wherein the lifting device (4) comprises a pneumatic extension cylinder.

5. The battery box structure of the electric two-wheeled vehicle according to claim 3, wherein the hydraulic extension cylinder is provided with a damper mechanism or a ratchet structure.

6. The battery box structure of the electric two-wheeled vehicle according to claim 4, wherein the hydraulic extension cylinder is provided with a damper mechanism or a ratchet structure.
